(19) Europäisches Patentamt

European Patent Office

Office européen des brevets

(11) **EP 1 686 026 A1**

(12) **EUROPEAN PATENT APPLICATION**

(43) Date of publication:
02.08.2006 Bulletin 2006/31

(51) Int Cl.:
*B60S 1/08* (2006.01)    *G01N 27/22* (2006.01)

(21) Application number: 05100637.7

(22) Date of filing: 31.01.2005

(84) Designated Contracting States:
AT BE BG CH CY CZ DE DK EE ES FI FR GB GR
HU IE IS IT LI LT LU MC NL PL PT RO SE SI SK TR
Designated Extension States:
AL BA HR LV MK YU

(71) Applicant: IEE INTERNATIONAL ELECTRONICS &
ENGINEERING S.A.
6468 Echternach (LU)

(72) Inventors:
• Lamesch, Laurent
4881 Lamadelaine (LU)
• Decoster, Yves
6760 Ethe (BE)

(74) Representative: Beissel, Jean et al
Office Ernest T. Freylinger S.A.,
B.P. 48
8001 Strassen (LU)

(54) **Differential capacitive rain sensor**

(57)    A differential capacitive rain sensor comprising a differential sensing capacitor having at least a first drive electrode, a second drive electrode and a sense electrode. A driving circuit is coupled to the first and the second drive electrodes for driving the first drive electrode with a first drive signal and the second drive electrode with a second drive signal, the second drive signal being substantially opposite in phase to the first drive signal. The sensor comprises a detection circuit having an input coupled to the sense electrode for detecting a change in a sense signal of the sense electrode. The detection circuit further comprises a controller using an error signal derived from the sense signal to control the amplitude of the first and/or the second drive signal so as to reduce the amplitude of the sense signal.

FIG.1

**Description**

The present invention relates to a capacitive rain sensor intended especially for use as a rain detection device on the windshield of an automotive vehicle.

*Background of the Invention*

A capacitive rain sensor normally allows controlling the wiper operation without intervention by the driver and thereby increases driving safety and comfort. Various types of single-ended capacitive rain sensors are known. In single-ended capacitive rain sensors, the presence of moisture in the region between the electrodes changes the capacitance between two sensing electrodes. Since an absolute capacitance is measured with single-ended capacitive sensors, it is difficult to distinguish between the change in capacitance due to moisture and the change in capacitance due to other effects such as varying temperature, windshield expansion or contraction, ageing, etc. Moreover with such single-ended sensors it is difficult to distinguish between a normally small moisture signal generated in the presence of moisture and unwanted variations in a normally large non-zero reference signal.

In order to overcome the drawbacks of single-ended capacitive sensors, the use of differential capacitors in capacitive rain sensors has been proposed, e.g. in US 5 682 788. A differential capacitor comprises at least three electrodes defining two normally identical capacitive sensing areas. A moisture detection signal is obtained as a function of the difference in capacitance between both capacitive sensing areas. Due to the differential nature of such a sensor, any influence that equally changes both capacitances defined by the three electrodes no longer affects the moisture detection signal. Moreover, the absolute value of both capacitances becomes practically irrelevant, whereby manufacturing and mounting requirements become less severe.

Although the use of differential capacitors in capacitive rain sensors helps to overcome drawbacks of known sensors, in particular single-ended capacitive sensors, a major difficulty remains to be overcome. The desire to use transparent foil type capacitors implies that the capacitors have to be mounted at least behind the first layer of glass of the windshield. In fact, such capacitors cannot be subjected to the abrasion to which the front face of the windshield is exposed. Due to the resulting distance between the capacitors and the front face of the windshield, the change in capacitance produced by average raindrops is relatively small. The occurrence of possibly large unwanted differential capacitances and the desire to detect even very small raindrops or fog adds to this difficulty. Therefore, also differential capacitive rain sensors have to be able to detect very small changes in capacitance in order to be sufficiently reliable. In other words, high sensitivity of the sensor is a major requirement.

*Object of the invention*

The object of the present invention is to provide an improved differential capacitive rain sensor.

*Summary of the Invention*

In order to overcome the abovementioned problems, the present invention proposes a differential capacitive rain sensor comprising a differential sensing capacitor having at least a first drive electrode, a second drive electrode and a sense electrode. A driving circuit is coupled to the first and the second drive electrodes for driving the first drive electrode with a first drive signal and the second drive electrode with a second drive signal, the second drive signal being substantially opposite in phase to the first drive signal. The sensor comprises a detection circuit having an input coupled to the sense electrode for detecting a change in a sense signal of the sense electrode. According to the invention, the detection circuit further comprises a controller using an error signal derived from the sense signal to control the amplitude of the first and/or the second drive signal so as to reduce the amplitude of the sense signal.

The electrodes of the sensor form two capacitive sensing areas for rain or moisture, e.g. on the front face of a vehicle windshield. In other words, the electrodes define two sensing capacitors that are operated differentially. To this effect, the drive circuit feeds each drive electrode with an alternating drive signal, e.g. a sine or square wave voltage. In steady state, the alternating drive signals are opposed in phase, i.e. the second drive signal is 180° phase shifted with respect to the first drive signal. The sensor operation is based on the assumption that, at a given instant in time, wetting events such as raindrops normally have a geometrically different distribution over both sensing areas, thereby causing a capacitive imbalance. This imbalance is reflected by a normally small sense signal on the sense electrode. Obviously, capacitive imbalance can be caused by other (non-wetting) effects or be inherent to the differential sensing capacitor and such an imbalance may be large compared to an imbalance caused by a wetting event.

The controller of the detection circuit provides an actuating quantity for driving the amplitude of the sense signal towards zero notwithstanding the presence of any capacitive imbalance. To this effect, an error signal is derived from the sense signal by suitable signal processing, e.g. rectification and current-to-voltage conversion. The controller compensates for capacitive imbalance by regulating the amplitudes of the drive signals. Although adjusting both amplitudes is preferred, similar results can be obtained by adjusting the amplitude of one drive signal only. The sensor thus comprises a feedback control loop providing automatic imbalance compensation. As will be appreciated, the controller insures automatic compensation of any slowly occurring or permanent capacitive imbalance. The controller also insures a proper distinction between any changes in capacity that occur fast in time, e.g. due to raindrops, and those that occur slow in time, e.g. due to uneven capacitor ageing or deformation. In fact, upon proper selection of its time constant, the controller automatically masks any slow changes while allowing fast changes to be detected. By keeping the amplitude of the sense signal small or essentially at zero level in steady state, the input amplifier of the detection circuit is normally kept out of saturation even in the presence of a large capacitive imbalance. The controller therefore allows to use an amplifier having high gain and small input signal range. Linearity of the amplifier is no longer a requirement. As a result, very small changes in capacity can be reliably detected by the detection circuit even in the presence of a large unwanted differential capacitance. The control loop also alleviates sensor manufacturing and circuit design requirements. For example capacitance equality of the differential sensing capacitor is no longer an issue and electrically caused imbalances, e.g. due to reference signal drifts are automatically compensated. In addition, the controller compensates for unavoidable small drifts in the phase relationship between the drive signals, i.e. small variations from the ideal 180 ° value of the phase shift.

For further processing, e.g. by a wiper control device, the detection circuit provides an output signal. Preferably, the error signal is made available as the output of the detection circuit. A fast change in differential capacity normally corresponds to a pulse in the error signal and serves as indicator of rain or moisture. In fact, information on the amount and quickness of the change is contained in the error signal, which allows improved wiper control.

Due to the necessity of bringing leads out of a windshield, resistive connection of the sensor electrodes to the drive and detection circuits is cumbersome. It is therefore advantageous to capacitively couple the first and second drive electrodes to the driving circuit and to capacitively couple the sense electrode to the input of the detection circuit. This allows to use capacitive coupling pads, e.g. on the inner windshield surface, and simplifies initial mounting and later replacement of a windshield equipped with the differential sensing capacitor. The control loop alleviates the requirements on capacitive coupling, since it compensates imbalance and allows to detect the (fast) changes in differential capacitance.

In a preferred embodiment, the controller comprises an integrator. Although other types of controllers may be used, an I-type controller is a particularly simple and effective solution.

In order to provide the controlled drive signals, the driving circuit preferably comprises first multiplier means providing the first drive signal by multiplying a first periodic signal by a first control signal and second multiplier means providing the second drive signal by multiplying a second periodic signal, opposite in phase to the first periodic signal, by a second control signal. Analog electronic mixers may be used as multiplier means for example. The above design enables control of both amplitudes whereby the dynamic range of the circuit is increased, i.e. a larger capacitive imbalance can be compensated when compared to single-sided amplitude control. The control signals for forming the drive signals are advantageously provided by a reference signal source and means for subtracting the controller output signal from the reference signal so as to provide the first control signal and means for adding the controller output signal to the reference signal so as to provide the second control signal. By a proper choice of the reference signal, it is easily insured that both control signals have a non-zero positive value. The periodic signals for forming the drive signals can be provided by a periodic signal source connected to a non inventing amplifier and to an inverting amplifier so as to provide the first periodic signal on the output of the non-inverting amplifier and the second periodic signal on the output of the inverting amplifier, Although a driving circuit as described above is preferred, other configurations such as two synchronized voltage controlled sources are not excluded.

Due to the alternating drive signals, the sense signal normally has an alternating waveform when a change in differential capacitance occurs. It is therefore preferable that the detection circuit comprises rectifying means for providing the error signal. In a simple embodiment, the rectifying means may be formed by a mixer for mixing the sense signal, possibly after current-to-voltage conversion, with the first or the second periodic signal.

In case the sense signal is a sense current flowing into/out of the sense electrode, the detection circuit preferably comprises a transimpedance amplifier having an input forming the input of the detection circuit and having an output connected to an input of the rectifying means. Although it is preferred to use the sense electrode current as sense signal, similar results can be achieved by voltage based detection.

In a preferred embodiment of the differential sensing capacitor, the sense electrode is arranged between the first and the second drive electrodes, the first drive electrode comprising a plurality of first drive branches, the second drive electrode comprising a plurality of second drive branches and the sense electrode comprising a first and a second opposed set of sense branches. The first drive branches are arranged to interdigitate with the first set of sense branches and the second drive branches are arranged to interdigitate with the second set of sense branches. This design provides increased electrode surface while minimizing the overall surface of the differential sensing capacitor. As will be appreciated, a fully active differential capacitor having two differentially driven sensing areas eliminates the need for a dedicated reference capacitor mounted to the windshield for isolating capacitive changes that are not caused by a wetting event.

In order to place the differential sensing capacitor within the working range of the windshield wipers, the first drive electrode, the second drive electrode and the sense electrode preferably comprise an elongate trunk section. Each trunk section defines a first portion to which the respective branches are connected and a second portion for electrically coupling the electrodes to the detection circuit or the driving circuit respectively. Advantageously, the differential sensing capacitor comprises two guard electrodes disposed between the second portions of the trunk sections so as to define a capacitively insensitive region, e.g. in the area outside the working range of the windshield wipers. The guard electrodes are normally kept at a constant potential, e.g. at ground potential. In order to shield the differential sensing capacitor from the vehicle interior, it may comprise a shield electrode extending essentially over the area of the differential sensing capacitor and disposed in a plane parallel to the differential sensing capacitor. This configuration allows to eliminate sense signal changes due to unwanted capacitive influences from the vehicle interior, for example caused by the hand of a vehicle occupant. The shield electrode is also normally kept at a constant potential, e.g. at ground potential.

### Brief Description of the Drawing

The present invention will be more apparent from the following description of a preferred embodiment with reference to the accompanying drawings, wherein:

Fig. 1:   is a block-circuit diagram of a preferred embodiment of a capacitive rain sensor;
Fig. 2:   is a plan view of a preferred differential sensing capacitor for use in the capacitive rain sensor of Fig.1;
Fig. 3:   is a cross-sectional view of the differential sensing capacitor of Fig.2 mounted in a windshield.

### Description of the preferred embodiment

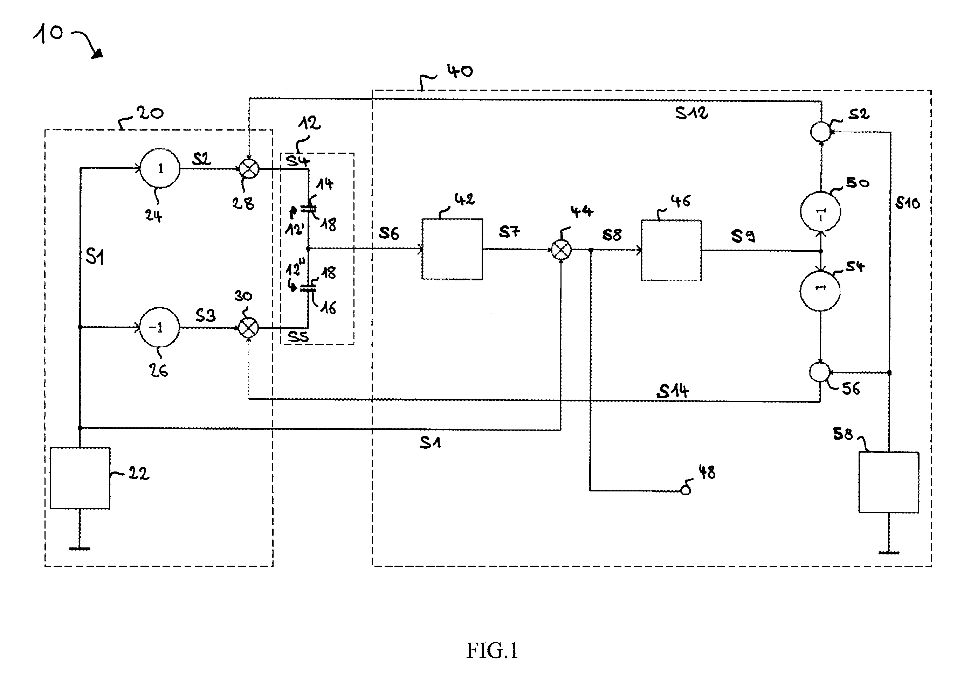

Fig. 1 shows a capacitive rain sensor generally identified by reference numeral 10. A differential sensing capacitor 12 is schematically represented by its electrical equivalent consisting of a first capacitor 12' and a second capacitor 12" which form a capacitive voltage divider. The differential sensing capacitor 12 has a first drive electrode 14, a second drive electrode 16 and a sense electrode 18. As will be apparent, the first capacitor 12' is formed by the first drive electrode 14 and the sense electrode 18 and the second capacitor 12" is formed by the second drive electrode 16 and the sense electrode 18.

The capacitive rain sensor 10 comprises a driving circuit generally identified by reference numeral 20. The driving circuit 20 comprises a carrier signal generator 22 for providing a periodic carrier signal S1 such as a sine wave or a square wave. The carrier frequency of S1 is preferably chosen in the range of 10kHz to 100kHz. Other frequencies and the use of modulated carriers signals, e.g. for EMC reasons, are however not excluded. The carrier signal generator 22 is connected to a first non-inverting amplifier 24 and to a first inverting amplifier 26. The output of the first non-inverting amplifier 24 is connected to a first input of a first mixer 28 and provides a signal S2 essentially identical to S1. The output of the first inverting amplifier 24 is connected to a first input of a second mixer 30 and provides a signal S3 of identical amplitude but phase shifted by 180° with respect to S1. As seen in Fig.1, the output of the first mixer 28 is connected to the first drive electrode 14 and the output of the second mixer 30 is connected to the second drive electrode 16. In consequence, a first drive signal S4 applied to the first drive electrode 14 is opposed in phase to a second drive signal S5 applied to the second drive electrode 16.

As further seen in Fig.1, the capacitive rain sensor 10 comprises a detection circuit generally identified by reference numeral 40. The input of the detection circuit 40 is connected to the sense electrode 18 of the differential sensing capacitor 12. A sensing amplifier 42 which is a transimpedance amplifier converts a sense signal S6, i.e. a sense current flowing into/out of the sense electrode 18, into a sense voltage S7. A third mixer 44 has its first input connected to the output of the sensing amplifier 42 and its second input connected to the output of the carrier signal generator 22. The third mixer 44 allows to rectify the sense voltage S7 to obtain an actual value voltage S8 which is substantially proportional to the sense voltage S7. The third mixer 44 preferably includes a low-pass filter to eliminate unwanted higher frequency components. As will be noted, this actual value voltage S8 is proportional to the amplitude of the sense signal S6 and the polarity of S8 corresponds to the relative polarity of S6 and S1. The output of the third mixer 44 is connected to an output 48 of the detection circuit 40 and to an integrator 46. The integrator 46 forms an I-type controller unit. The integrator 46 integrates the actual value voltage S8 as an error signal and outputs a raw control voltage S9. A second inverting amplifier 50, having a gain of —1 for example, connects the output of the integrator 46 to a first adder 52. A second non-inverting amplifier 54, having a gain of +1 for example, connects the output of the integrator 46 to a second adder 56. A reference voltage source 58 provides a reference voltage S10 to the other inputs of the first adder 52 and the second adder 54. The first adder 52 provides on its output a first control voltage S12 and the second adder 56 provides on its output a second control voltage S14. The reference voltage S10 is chosen such that the voltages S12 and S14 are always positive, i.e. S10>max(S9), where max(S9) is the maximum absolute output value of integrator 46. As further seen in Fig.1, the output of the first adder 52 is connected to the second input of the first mixer 28 and the output of the second adder 56 is connected to the second input of the second mixer 30. It will be appreciated from the above description that the detection circuit 40 in combination with the driving circuit 20 form a dual control loop which allows to control the amplitudes of the drive signals S4 and S5 applied to the differential sensing capacitor 12.

The operation mode of the capacitive rain sensor 10 described above will now be described in more detail. The first drive signal S4 is formed by multiplication of the signal S2 (corresponding to the periodic carrier signal S1) with the first control signal S12. Since the first control signal S12 is always positive, the first drive signal S4 is an amplified or attenuated version of the periodic carrier signal S1, depending on the amplitude of the first control signal S12. The same applies to the second drive signal S5, the only difference being that S5 is a phase inverted and amplified or attenuated version of the periodic carrier signal S1.

For illustration purposes it is now assumed that the mixers 28 and 30 are ideal multipliers and that the periodic carrier signal S1 is an ideal sine wave voltage of unitary amplitude:

$$ S1 = \sin(\omega t), $$

wherein $\omega$: is the frequency of the periodic carrier signal.

The following equation then holds for the sense current:

$$ i_S = A \cdot C_1 \cdot \omega \cos(\omega t) - B \cdot C_2 \cdot \omega \cos(\omega t), $$

wherein:

$i_s$: is the sense current represented by the sense signal S6;

A: is the amplitude of the first control signal S12;

B: is the amplitude of the second control signal S14;

$C_1$: is the capacitance of the first capacitor 12'; and

$C_2$: is the capacitance of the second capacitor 12".

It may be noted that the derivatives of the capacities have been neglected on the assumption of small and slow changes thereof in the above equation. As described above, the actual voltage value S8 is proportional to the sense signal S6. The polarity of actual voltage value S8 (i.e. the error signal) also depends on the phase relation between the periodic carrier signal S1 and the sense voltage S7 and therefore the sense current S6. This implies that, if the capacitance between the first drive electrode 14 and the sense electrode 18 (i.e. the capacitance $C_1$ of the equivalent capacitor 12') is greater than the capacitance between the second drive electrode 16 and the sense electrode 18 (i.e. the capacitance $C_2$ of the equivalent capacitor 12"), the actual value voltage S8 is positive and vice versa. As a result, the actual value voltage S8 is a measure of the capacitive imbalance within the differential sense electrode 12. This imbalance is compensated by the action of the integrator 46. In fact, by nature of the control loop, the integrator 46 operates to drive the actual value voltage S8 (which forms the error signal) permanently towards zero. This is achieved when the output of integrator 46 has reached the value which makes the amplitude A of the first control signal S12 and the amplitude B of the second control signal S14 fulfil the equation:

$$ \frac{C_2}{C_1} = \frac{A}{B} $$

In this condition, the value of the sense current is represented by the sense signal S6 is zero an the circuit operates in steady state. Accordingly, the control loop comprising the integrator 46 adapts the amplitudes A and B so as to drive the sense signal S6 towards zero. The differences in the capacitances $C_1$ and $C_2$, e.g. due to manufacturing tolerances, are therefore automatically compensated. In addition, any change in either capacitance $C_1$ or $C_2$ (e.g. due

to dirt, temperature change or ageing) that is slow in time compared to the integration time constant of the integrator 46 is automatically compensated.

If a change of imbalance between the capacitance $C_1$ or $C_2$ that is fast in time occurs, as is the case for a raindrop falling on the sense area above the differential capacitor 12, the control loop is momentarily disturbed. In fact, water has a significantly higher relative permittivity ($\varepsilon_r \approx 80$) than air ($\varepsilon_r \approx 1$) such that a change in capacitance occurs in the presence of a raindrop or moisture in the sense area. The disturbance in the control loop caused by such a "wetting event" is reflected by a change in the actual value voltage S8 and appears on the output 48 as a positive or negative voltage, depending on whether the raindrop or moisture has fallen above the first capacitor 12' or the second capacitor 12". The integrator 46 counteracts this change by adapting the amplitude A of the first control signal S12 and the amplitude B of the second control signal S14 so as to turn back to steady state. Although dual symmetric action on both amplitudes A and B is preferred, a control loop with a single feedback path acting on one amplitude only can achieve similar results. As the integrator 46 requires a certain time (depending on its integration time constant), the positive or negative voltage persists during a certain time on the output 48. As a result, the occurrence of a "wetting event", for example due to a raindrop falling on the windshield above the sense area, is indicated by a positive or negative voltage pulse on the output 48 of the capacitive rain sensor 10. This pulse can then be evaluated for further processing, e.g. by a windshield wiper control device (not shown).

A number of advantages resulting from the above described sensor design may be noted. Since the sense current (signal S6) is reduced to zero after each "wetting event", the input stage of the detection circuit (i.e. the sensing amplifier 42) can have a much simpler design. It does for example not need to be linear, neither does it need to have a well defined gain nor does it need to have a large input signal range. The control loop also allows saturation of the sensing amplifier 42 without causing malfunction. Furthermore, the control loop allows suppression of large changes in the capacitance of capacitors 12' and 12" which would otherwise overdrive the detection circuit and influence the measurements. Generally speaking, the control loop significantly increases the sensitivity of the capacitive rain sensor 10. Furthermore, no reference capacitor is necessary, as only changes in capacitance are measured. Since no absolute capacitance is measured, the capacitive rain sensor 10 also allows capacitive coupling of the electrodes 14, 16 and 18 to the driving circuit 20 or the detection circuit 40 respectively, whereby mounting of a windshield comprising the differential sensing electrode 12 is significantly facilitated.

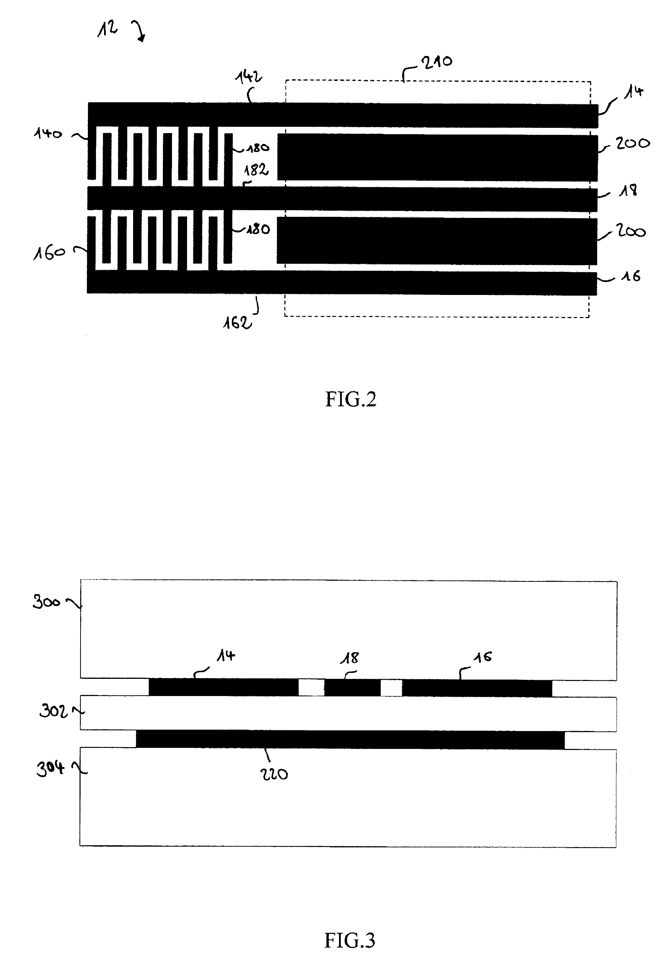

Turning now to Fig.2 and Fig.3, a preferred embodiment of the differential sensing capacitor 12 will be described. As described above, the differential sensing capacitor 12 comprises a first drive electrode 14, a second drive electrode 16 and a sense electrode 18 disposed there between. As seen in Fig.2, the first drive electrode 14 is provided with a number of first drive branches 140 extending away from a trunk section 142 towards the sense electrode 18. Similarly, the first second drive electrode 16 is provided with a number of second drive branches 160 extending away from a trunk section 162 towards the sense electrode 18. The sense electrode in turn 18 also comprises sense branches 180 disposed on either side of a trunk section 182 thereof in such manner that the drive branches 142 and 162 interdigitate with the sense branches 180. By this arrangement, the electrode area of the differential sensing capacitor 12 is increased without significant increase in its size. As further seen in Fig.2, two guard electrodes 200 are disposed between the trunk sections 142, 162 and 182 and connected to ground for example, so as to provide a capacitively insensitive area 210. The insensitive area 210 is normally placed below the windshield area that is not cleaned by the wipers so as to make the capacitive rain sensor 10 insensitive in this area.

Fig.3 shows how the differential sensing capacitor 12 is preferably integrated into a windshield of an automotive vehicle for example. The windshield comprises an outer glass layer 300 defining the front face of the windshield, an intermediate plastic foil layer 302 for safety purposes and an inner glass layer 304 defining the inner face of the windshield. The electrodes 14, 16 and 18 are preferably made of a conductive and transparent material such as Indium Tin Oxide (ITO) and applied to the inner side of the outer glass layer or the outer side of the plastic layer 302 before the latter are laminated together. As further seen in Fig.3, an additional shield electrode 220 is disposed between the plastic layer 302 and the inner glass layer 304. The shield electrode 220 is normally connected to ground and preferably extends over the area of the differential sensing capacitor 12 in the plane perpendicular to the plane of Fig.3. The shield electrode 220 allows to make the capacitive rain sensor 10 insensitive towards the interior side of the windshield e.g. for suppressing the response of the sensor to a touch of a finger. Additionally, the shield electrode 220 may be provided with cut out spaces for connection pads used for capacitively coupling the differential sensing capacitor 12 to the detection or driving circuit 20, 40.

Part list:

| | |
|---|---|
| capacitive rain sensor | 10 |
| differential sensing capacitor | 12 |

| first capacitor | 12' |
| second capacitor | 12" |
| first drive electrode | 14 |
| second drive electrode | 16 |
| sense electrode | 18 |
| driving circuit | 20 |
| carrier signal generator | 22 |
| first non-inverting amplifier | 24 |
| first inverting amplifier | 26 |
| first mixer | 28 |
| second mixer | 30 |
| detection circuit | 40 |
| sensing amplifier | 42 |
| third mixer | 44 |
| integrator | 46 |
| output | 48 |
| second inverting amplifier | 50 |
| first adder | 52 |
| second non-inverting amplifier | 54 |
| second adder | 56 |
| reference voltage source | 58 |
| first drive branches | 140 |
| trunk section | 142, 162, 182 |
| second drive branches | 160 |
| sense branches | 180 |
| guard electrode | 200 |
| insensitive area | 210 |
| shield electrode | 220 |
| outer glass layer | 300 |
| plastic foil layer | 302 |
| inner glass layer | 304 |

**Claims**

1. A differential capacitive rain sensor comprising
a differential sensing capacitor having at least a first drive electrode, a second drive electrode and a sense electrode,
a driving circuit coupled to said first and said second drive electrodes for driving said first drive electrode with a first drive signal and said second drive electrode with a second drive signal, said second drive signal being substantially opposite in phase to said first drive signal, and
a detection circuit having an input coupled to said sense electrode for detecting a change in a sense signal of said sense electrode
**characterized in that**
said detection circuit comprises a controller using an error signal derived from said sense signal to control the amplitude of said first and/or said second drive signal so as to reduce the amplitude of said sense signal.

2. The capacitive rain sensor according to claim 1, wherein said error signal is available on an output of said detection circuit.

3. The capacitive rain sensor according to claim 1 or 2, wherein said first and said second drive electrodes are capacitively coupled to said driving circuit and said sense electrode is capacitively coupled to said input of said detection circuit.

4. The capacitive rain sensor according to any one of claims 1 to 3, wherein said controller comprises an integrator.

5. The capacitive rain sensor according to any one of the preceding claims, wherein said driving circuit comprises first multiplier means providing said first drive signal by multiplying a first periodic signal by a first control signal and second multiplier means providing said second drive signal by multiplying a second periodic signal, opposite in phase to said first periodic signal, by a second control signal.

6. The capacitive rain sensor according to claim 5, wherein said detection circuit comprises a reference signal source and means for subtracting the controller output signal from said reference signal so as to provide said first control signal and means for adding the controller output signal to said reference signal so as to provide said second control signal.

7. The capacitive rain sensor according to claim 5 or 6, wherein said driving circuit comprises a periodic signal source connected to a non-inverting amplifier and to an inverting amplifier so as to provide said first periodic signal on the output of said non-inverting amplifier and said second periodic signal on the output of said inverting amplifier.

8. The capacitive rain sensor according to any one of the preceding claims, wherein said detection circuit further comprises rectifying means for providing said error signal.

9. The capacitive rain sensor according to claim 8, wherein said sense signal is a sense current flowing into/out of said sense electrode and said detection circuit further comprises a transimpedance amplifier having an input forming the input of said detection circuit and having an output connected to an input of said rectifying means.

10. The capacitive rain sensor according to any of the preceding claims wherein said sense electrode is arranged between said first and said second drive electrodes, said first drive electrode comprising a plurality of first drive branches, said second drive electrode comprising a plurality of second drive branches and said sense electrode comprising a first and a second opposed set of sense branches, said first drive branches being arranged to interdigitate with said first set of sense branches and said second drive branches being arranged to interdigitate with said second set of sense branches.

11. The capacitive rain sensor according to claim 10, wherein each of said first drive electrode, said second drive electrode and said sense electrode comprises an elongate trunk section, each trunk section defining a first portion to which the respective branches are connected and a second portion for coupling to said detection circuit or said driving circuit respectively.

12. The capacitive rain sensor according to claim 11, further comprising two guard electrodes disposed between said second portions of said trunk sections so as to define a capacitively insensitive region.

13. The capacitive rain sensor according to any of claims 10 to 12, further comprising a shield electrode extending essentially over the area of said differential sensing capacitor and disposed in a plane parallel to said differential sensing capacitor.

FIG.1

FIG.2

FIG.3

**European Patent Office**

# EUROPEAN SEARCH REPORT

Application Number

EP 05 10 0637

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| Y,D | US 5 801 307 A (NETZER ET AL) 1 September 1998 (1998-09-01) * column 4, line 50 - column 8, line 12 * ----- | 1-4, 8-11,13 | B60S1/08 G01N27/22 |
| Y | WO 98/30922 A (NETZER, YOHAY; NETZER, YISHAY) 16 July 1998 (1998-07-16) * page 7, line 22 - page 24, line 25; figures * | 12 | |
| A | | 1-4, 8-11,13 | |
| Y | EP 0 485 857 A (TELEFUNKEN ELECTRONIC GMBH; TEMIC TELEFUNKEN MICROELECTRONIC GMBH) 20 May 1992 (1992-05-20) * column 1, line 15 - line 37; figures * * column 2, line 26 - line 41 * * column 3, line 21 - column 4, line 3 * ----- | 1-4,8,9, 12,13 | |
| Y | US 4 831 493 A (WILSON ET AL) 16 May 1989 (1989-05-16) * abstract; figure 10 * ----- | 10,11 | TECHNICAL FIELDS SEARCHED (Int.Cl.7) |
| A | US 5 637 798 A (SCHATZ ET AL) 10 June 1997 (1997-06-10) * column 2, line 65 - column 3, line 50; figures * ----- | 1 | B60S G01N G01P G01R H02P |
| A | DE 101 09 873 A1 (DENSO CORP., KARIYA) 13 September 2001 (2001-09-13) * the whole document * ----- | 1 | H01G |

The present search report has been drawn up for all claims

| Place of search | Date of completion of the search | Examiner |
|---|---|---|
| Munich | 20 June 2005 | Jazbec, S |

EPO FORM 1503 03.82 (P04C01)

## ANNEX TO THE EUROPEAN SEARCH REPORT
## ON EUROPEAN PATENT APPLICATION NO.

EP 05 10 0637

This annex lists the patent family members relating to the patent documents cited in the above-mentioned European search report.
The members are as contained in the European Patent Office EDP file on
The European Patent Office is in no way liable for these particulars which are merely given for the purpose of information.

20-06-2005

| Patent document cited in search report | | Publication date | Patent family member(s) | | Publication date |
|---|---|---|---|---|---|
| US 5801307 | A | 01-09-1998 | US | 5682788 A | 04-11-1997 |
| | | | AU | 5732698 A | 03-08-1998 |
| | | | EP | 0960346 A1 | 01-12-1999 |
| | | | JP | 3548854 B2 | 28-07-2004 |
| | | | JP | 2002504226 T | 05-02-2002 |
| | | | WO | 9830922 A1 | 16-07-1998 |
| | | | DE | 69608358 D1 | 21-06-2000 |
| | | | DE | 69608358 T2 | 28-09-2000 |
| | | | EP | 0753438 A1 | 15-01-1997 |
| WO 9830922 | A | 16-07-1998 | US | 5801307 A | 01-09-1998 |
| | | | AU | 5732698 A | 03-08-1998 |
| | | | EP | 0960346 A1 | 01-12-1999 |
| | | | JP | 3548854 B2 | 28-07-2004 |
| | | | JP | 2002504226 T | 05-02-2002 |
| | | | WO | 9830922 A1 | 16-07-1998 |
| EP 0485857 | A | 20-05-1992 | DE | 4036407 A1 | 21-05-1992 |
| | | | EP | 0485857 A2 | 20-05-1992 |
| | | | JP | 4299235 A | 22-10-1992 |
| | | | US | 5225669 A | 06-07-1993 |
| US 4831493 | A | 16-05-1989 | CA | 1286723 C | 23-07-1991 |
| | | | DE | 3842180 A1 | 13-07-1989 |
| | | | FR | 2625310 A1 | 30-06-1989 |
| | | | IT | 1227803 B | 07-05-1991 |
| | | | JP | 1209349 A | 23-08-1989 |
| | | | JP | 1901505 C | 27-01-1995 |
| | | | JP | 6023703 B | 30-03-1994 |
| | | | KR | 9104145 B1 | 22-06-1991 |
| US 5637798 | A | 10-06-1997 | DE | 4439203 A1 | 09-05-1996 |
| | | | JP | 8211093 A | 20-08-1996 |
| DE 10109873 | A1 | 13-09-2001 | JP | 2001249028 A | 14-09-2001 |
| | | | US | 2001019273 A1 | 06-09-2001 |

EPO FORM P0459

For more details about this annex : see Official Journal of the European Patent Office, No. 12/82